# EUROPEAN PATENT SPECIFICATION

(11) **EP 0 463 856 B1**
(45) Date of publication and mention of the grant of the patent: **29.01.1997**
(21) Application number: 91305733.7
(22) Date of filing: 25.06.1991
(51) Int. Cl.: H04M 1/72, H04M 1/02

(54) **A device for scanning the menus of a telephone set**
Vorrichtung zum Durchlaufen des Menüs eines Fernsprechgeräts
Dispositif de défilement des menus d'un poste téléphonique

(30) Priority: 26.06.1990 FI 903221
(43) Date of publication of application: 02.01.1992
(73) Proprietor: NOKIA MOBILE PHONES LTD., 24101 Salo (FI)
(72) Inventor: Virkkunen, Jorma, SF-242800 Halikko (FI); Hallikainen, Jykri, SF-90570 Oulu 57 (FI); Heinonen, Ari, SF-21530 Paimio (FI); Jylänki, Teppo, SF-90570 Oulu 57 (FI)
(74) Representative: Frain, Timothy John

(56) References cited:
- EP-A- 0 373 387
- US-A- 4 801 931
- US-H- 966 005

## Description

The invention relates generally to telephones, and more particularly, to hand-held phones with a display.

Present mobile and cellular telephones widely use microprocessors which control the operation of the set. The interaction between the user and the telephone set is effected through the display and the keypad. The microprocessor writes out menus on the display, and the user may choose the necessary procedures with the aid of the instructions on the menus, and give the microprocessor commands via the keys. The menus can comprise, for example, the instructions for using different functions, an abbreviated dialling memory and contact and other information assembled by the telephone.

The size of the display is limited, thus the user must be able to scan the menu pages preferably both forward and backwards. For this purpose two keys are used, of which one is used to scan the menus forward and the other one is used to scan the menus backwards. In this case the scanning rate can be arranged to be modifiable so that when the key is pressed, a certain delay first occurs before the next menu page appears on the display. By pressing the key permanently the scanning rate can be increased. In this case the delays and the scanning rate generally are predefined.

US-H-966 005 discloses a repertory dialer having a five button scanning control causing the alphanumeric information stored in its memory to be sequentially displayed. Scanning is achieved by the operation of either a fast forward button, a slow forward button, a stop button, a slow backward button, or a fast backward button.

Distinct and reliable operation is required of a telephone set, especially when it is used by a person driving a car. However, the scanning of the menus with the aid of two or more keys is thus not always sufficiently clear and simple. On the other hand, portable telephones in particular, are expected to be compact and lightweight, whereby the use of two or more buttons presents a certain limitation because two or more keys of sufficiently large size have to be fitted in the keypad or in its proximity.

US 5 086 510 discloses a telephone handset combined with a spherical cursor control element for moving a cursor in x and y directions on a monitor.

According to the present invention there is provided a telephone including a processor, a display, and a device for scanning menus shown on the display, the device comprising a finger actuated rolling means and elements which detect and transform the direction and speed of rotation of the finger actuated rolling means into control signals, which are conducted to the processor controlling the display of the menus on the display.

The use of a finger actuated rolling means for the scanning of the menus of the telephone set is simple and clear, and in addition, the finger actuated rolling means on the surface of the telephone requires less space than two keys. The finger actuated rolling means could advantageously be thumb wheel or a thumb ball.

The advantageous embodiments of the invention are presented in the other claims. The invention can be advantageously used in mobile and cellular telephones.

The invention is described in the following with the aid of exemplary embodiments with reference to the appended drawing, in which:
Fig. 1 illustrates a hand-held phone provided with a thumb wheel;
Fig. 2 illustrates a hand-held phone provided with a thumb ball;
Fig. 3 shows another placement of a thumb wheel;
Fig. 4 illustrates schematically the device according to the invention which uses a potentiometer to detect the direction and speed of rotation of the thumb wheel;
Fig. 5 shows schematically another embodiment according to the invention which uses optical devices; and Fig. 6 visualizes the operation of the device in Fig. 5 with the aid of a pulse diagram.

The following description of the exemplary embodiments is based on the assumption that the device in accordance with the invention is situated in a standard cellular telephone, whereby the other elements of the telephone are assumed to be known. The present description only handles the relevant parts of the telephone, i.e., the arrangement of the finger actuated rolling means and the detecting and transforming elements.

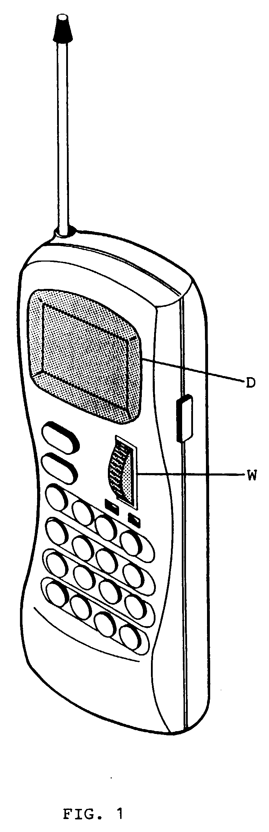

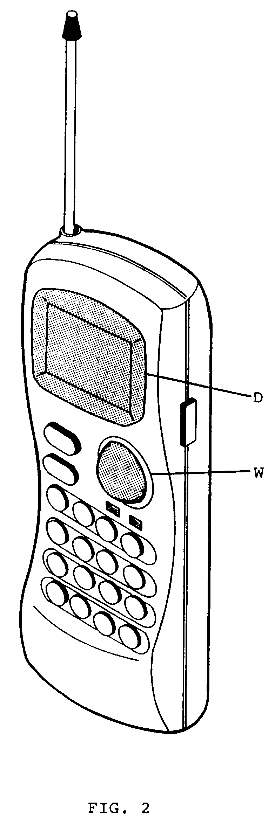

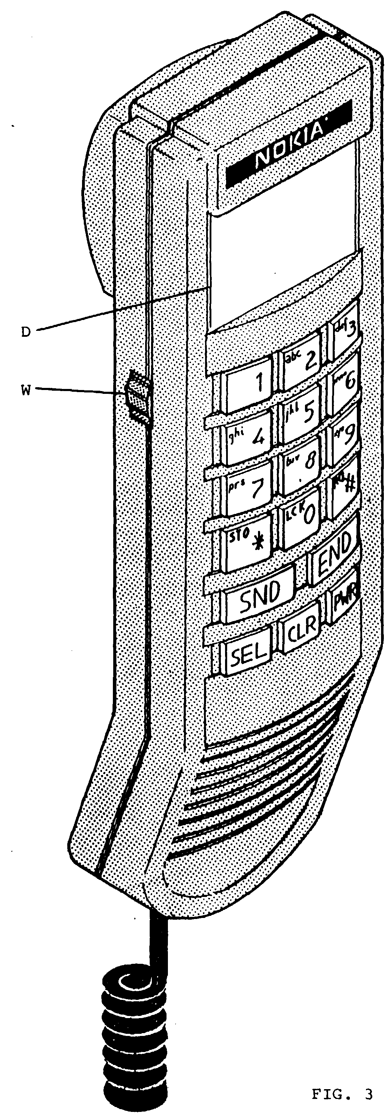

Fig. 1 and 2 show a typical hand-held phone provided with a display D, a key pad as known and a finger actuated rolling means in accordance with the present invention. In Fig. 1 the finger actuated rolling means is a thumb wheel W, and in Fig. 2 such means is a thumb ball. Fig. 3 showS an advantageous location especially for the thumb wheel. This placement is ergonomically better because it is easier to actuate with a finger a wheel placed on the side of the phone than a wheel placed on the main surface of the phone.

Now we consider what happens when the finger actuated means is rolled. The following description concerns the thumb wheel, but instead of the wheel we can use the ball as well.

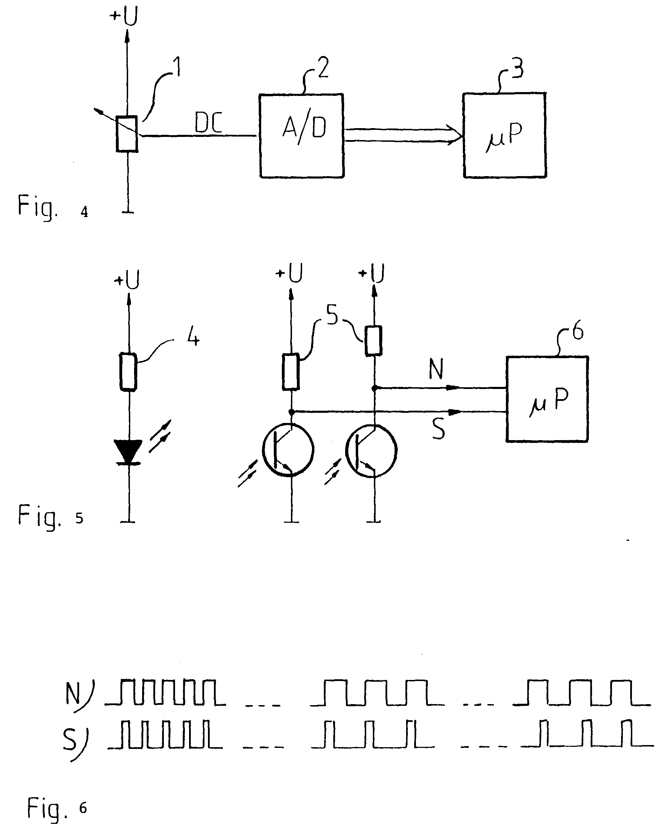

Fig. 4 shows a device in which a known thumb wheel uses helical potentiometer 1 which is coupled thereto. The coupling can be implemented by a known method, for example, by coupling the shafts of the potentiometer and the thumb wheel or thumb ball together. A commensurate direct voltage signal DC to the swivelling position of the finger actuated rolling means is obtained from the tapping of the potentiometer, and it is directed to the detecting and transforming elements which here are implemented by analogue/digital converter 2, and the digital control signal coming from there is conducted via a bus to processor 3 which controls the menu.

In the following text the word thumb wheel refers to the finger actuated means in general.

The user can choose the velocity and direction of the scanning by turning the thumb wheel and thus helical potentiometer 1 to the desired direction and at the desired speed. Consequently, the menu pages output on the display (not described) by processor 3 will switch in the desired manner, i.e., in the desired direction and at the desired speed, and the user can promptly bring into view the desired menu. Such an operation is natural from the point of view of the user as the movement of the hand is directly converted into a visual function perceptible to the eye. Alternatively, the control signal produced by the thumb wheel can be processed by processor 3, e.g., in order to increase or decrease the scanning speed of the menus in a manner preselected by the user.

The thumb wheel may now be freely placed on the surface of the telephone taking into account the ergonomics. The ergonomics of the cellular telephone improve if the thumb wheel is placed on the side of the telephone set, to be turned by the thumb (or finger) of the hand holding the telephone, in the immediate proximity of the function keypad of the telephone. The solution in accordance with the invention saves in the surface area of the telephone since the thumb wheel on the surface of the telephone requires less room than the two prior art keys, especially when the thumb wheel is placed on the side of the telephone.

According to the second embodiment of the invention, a magnetic or capacitive coupling circuit has been arranged between the thumb wheel and the detecting and transforming elements which in the known manner produces signals to the processor via the analogue/digital converter. Thus a part of the magnetic/capacitive circuit is arranged on the thumb wheel, which part effects a change in the field while moving with the wheel, which change is detected by the other element coupled to the converter of the magnetic/capacitive circuit.

In the most preferred embodiment the detecting and transforming elements comprise circuit 4-5 which optically detects the movement of the thumb wheel, and which produces digital signals N, S which are conducted to processor 6, as illustrated in Fig. 5. A beam of light generated by a light emitting diode or the like in circuit 4 is reflected or interrupted periodically in a known manner in accordance with the movement of the thumb wheel. Preferably two phototransistors or responsive light detecting devices are arranged to receive the beam of light from the ligt emitting diode. One transistor produces output signal N the frequency of which corresponds to the turning speed of the thumb wheel, and the other one produces output signal S the point of occurrence of which corresponds to the direction of rotation of the thumb wheel. Since the light received is in a pulse form, detecting circuit 5 produces, by a suitable sizing of the circuit, digital signals N and S in its outputs which can be coupled directly to processor 6 without the intermediate analogue/digital converter. Those skilled in the art will comprehend that this embodiment consists of a technically simple solution which is also reliable because the number of mechanical parts is small and the electric circuits are simple.

Fig. 6 visualizes schematically control pulses N and S produced by the optical circuit. The pulse sequence on the left in the figure illustrates in the case of pulse N that the thumb wheel is turned fast, whereby the pulse frequency is high and the pulses short. When the turning speed in the middle and on the right is decreased, the pulse frequency decreases and the pulse length increases. The direction of rotation of the thumb wheel is indicated so that corresponding pulse S is of a fixed length, but the point of occurrence indicates the direction of rotation. In Fig. 6, on the left and in the middle, pulses S occur on the front edge of pulses N when the thumb wheel is turned forward, and pulses S are on the back edge of pulses N, respectively, when the thumb wheel is turned backwards.

Even though this description is based on the assumption that the device according to the invention is used in a cellular telephone, it is clear to those skilled in the art that the inventive idea can be applied to many other equivalent telephone sets.

## Claims

1. A telephone including a processor, a display, and a device for scanning menus shown on the display, the device comprising a finger actuated rolling means and detecting and transforming elements (1,2;4,5) which produce control signals in dependence on the direction and speed of rotation of the finger actuated rolling means, which control signals are conducted to the processor (3;6) controlling the display of the menus on the display.

2. A telephone according to Claim 1, wherein the finger actuated rolling means is a thumb wheel.

3. A telephone according to Claim 1, wherein the finger actuated rolling means is a thumb ball.

4. A telephone according to any preceding Claim, wherein the detecting and transforming elements comprise a helical potentiometer (1) and an analogue/digital converter (2).

5. A telephone according to any preceding Claim, wherein a magnetic or capacitive coupling circuit is arranged between the finger actuated rolling means and the detecting and transforming elements, and that the detecting and transforming elements further comprise an analogue/digital converter.

6. A telephone according to any of Claims 1 to 3, wherein the detecting and transforming elements comprise a circuit (4-5) which optically detects the movement of the finger actuated rolling means, producing digital control signals (N, S) which are conducted to the processor (6).

7. A telephone according to any one of claims 1, 2, 3 or 6, wherein the control signals comprise first control pulses, the frequency of which is high when the finger actuated rolling means is turned fast and decreases when the turning speed is decreased, and second control pulses, the point of occurrence of which indicates the direction of rotation of the finger actuated rolling means.

8. A telephone according to any one of the preceding Claims, wherein the finger actuated rolling means is arranged on the telephone in immediate proximity of an operating keypad.

9. A telephone according to any one of the preceding Claims, wherein the finger actuated rolling means is arranged on the side of the telephone for turning by a finger or thumb of a hand holding the telephone.

## Patentansprüche

1. Telefon mit einem Prozessor, einem Bildschirm und einer Einrichtung zum Scannen von Menüs. die auf dem Bildschirm dargestellt werden, wobei die Einrichtung fingerbetriebene Rollmittel sowie Detektions- und Transformationselemente (1,2;4,5) enthält. die in Abhängigkeit der Richtung und der Rotationsgeschwindigkeit der fingerbetriebenen Rollmittel Seuersignale liefern, die zum Prozessor (3:6) geleitet werden, der die Menüanzeige auf dem Bildschirm steuert.

2. Telefon nach Anspruch 1, bei dem die fingerbetriebenen Rollmittel durch ein Zackenrad gebildet sind.

3. Telefon nach Anspruch 1, bei dem die fingerbetriebenen Rollmittel durch ein Zackenball gebildet sind.

4. Telefon nach irgendeinem vorangegangenen Anspruch, bei dem die Detektions- und Transformationselemente ein Wendelpotentiometer (1) und einen Analog/Digital Wandler (2) enthalten.

5. Telefon nach irgendeinem vorangegangenen Anspruch, bei dem zwischen den fingerbetriebenen Rollmitteln und den Detektions- und Transformationselementen ein magnetischer oder kapazitiver Koppelkreis angeordnet ist, und die Detektions- und Transformationselemente einen Analog/Digital Wandler enthalten.

6. Telefon nach irgendeinem der Ansprüche 1 bis 3, bei dem die Detektions- und Transformationselemente einen Schaltkreis (4-5) enthalten, der die Bewegung der fingerbetriebenen Rollmittel optisch detektiert und digitale Steuersignale (N, S) erzeugt, die zum Prozessor (6) geleitet werden.

7. Telefon nach irgendeinem der Ansprüche 1,2,3 oder 6, bei dem die Steuersignale erste Steuerimpulse enthalten, deren Frequenz hoch ist, wenn die fingerbetriebenen Rollmittel schnell gedreht werden, und deren Frequenz mit langsamer werdender Drehgeschwindigkeit abnimmt, und zweite Steuerimpulse enthalten, deren Auftreten die Rotationsrichtung der fingerbetriebenen Rollmittel anzeigt.

8. Telefon nach irgendeinem der vorangegangenen Ansprüche, bei dem die fingerbetriebenen Rollmittel auf dem Telefon in ummittelbarer Nähe einer Steuertastenkonsole angeordnet sind.

9. Telefon nach irgendeinem der vorangegangenen Ansprüche, bei dem die fingerbetriebenen Rollmittel an der Seite des Telefons angeordnet sind, um von einem Finger oder Daumen einer das Telefon haltenden Hand gedreht zu werden.

## Revendications

1. Téléphone comprenant un processeur, un affichage et un dispositif pour faire défiler des menus visualisés sur l'affichage, le dispositif comprenant un moyen de défilement actionné par doigt et des éléments de détection et de transformation (1, 2 ; 4, 5) qui produisent des signaux de commande en fonction du sens et de la vitesse de rotation du moyen de défilement actionné par le doigt, lesquels signaux de commande sont conduits vers le processeur (3 ; 6) commandant l'affichage des menus sur l'affichage.

2. Téléphone selon la revendication 1, dans lequel le moyen de défilement actionné par le doigt est une molette.

3. Téléphone selon la revendication 1, dans lequel le moyen de défilement actionné par le doigt est une boule.

4. Téléphone selon l'une quelconque des revendications précédentes, dans lequel les éléments de détection et de transformation comprennent un potentiomètre hélicoïdal (1) et un convertisseur analogique/numérique (2).

5. Téléphone selon l'une quelconque des revendications précédentes, dans lequel un circuit de couplage magnétique ou capacitif est prévu entre le moyen de défilement actionné par le doigt et les éléments de détection et de transformation et en ce que les éléments de détection et de transformation comprennent de plus un convertisseur analogique/numérique.

6. Téléphone selon l'une quelconque des revendications 1 à 3, dans lequel les éléments de détection et de transformation comprennent un circuit (4 et 5) qui détecte optiquement le déplacement du moyen de défilement actionné par le doigt, produisant des signaux de commande numériques (N, S) qui sont conduits au processeur (6).

7. Téléphone selon l'une quelconque des revendications 1, 2, 3 ou 6, dans lequel les signaux de commande comprennent des premières impulsions de commande, dont la fréquence est élevée lorsque le moyen de défilement actionné par le doigt est tourné rapidement et diminue lorsque la vitesse de rotation est diminuée, et des secondes impulsions de commande, dont le point d'arrivée indique le sens de rotation du moyen de défilement actionné par le doigt.

8. Téléphone selon l'une quelconque des revendications précédentes, dans lequel ledit moyen de défilement actionné par le doigt est monté sur le téléphone à proximité immédiate d'un bloc de touches de fonctions.

9. Téléphone selon l'une quelconque des revendications précédentes, dans lequel le moyen de défilement actionné par le doigt est placé sur le côté du téléphone pour être tourné par un doigt ou pouce d'une main tenant le téléphone.
